# EUROPÄISCHE PATENTSCHRIFT

(11) **EP 2 394 259 B1**
(45) Veröffentlichungstag und Bekanntmachung des Hinweises auf die Patenterteilung: **27.05.2015**
(21) Anmeldenummer: 10708700.9
(22) Anmeldetag: 28.01.2010
(51) Int. Cl.: C09J 7/02, G09F 3/02, B42D 25/00, G09F 3/00

(54) **WERT- UND/ODER SICHERHEITSDOKUMENT UND VERFAHREN ZUR HERSTELLUNG DESSELBEN**
VALUABLE OR SECURITY DOCUMENT AND METHOD OF PRODUCING IT
DOCUMENT DE VALEUR OU DE SÉCURITÉ ET SON PROCÉDÉ DE PRODUCTION

(30) Priorität: 04.02.2009 DE 102009007548
(43) Veröffentlichungstag der Anmeldung: 14.12.2011
(73) Patentinhaber: Bundesdruckerei GmbH, 10969 Berlin (DE)
(72) Erfinder: SEIJO-BOLLIN, Hans-Peter, 10245 Berlin (DE); LEOPOLD, André, 10119 Berlin (DE); MÄRTENS, Detlef, 13599 Berlin (DE); GAHLBECK, Jeffry, 12437 Berlin (DE)
(74) Vertreter: Keil & Schaafhausen Patent- und Rechtsanwälte
(86) Internationale Anmeldenummer: PCT/EP2010/000504
(87) Internationale Veröffentlichungsnummer: WO 2010/089050

(56) Entgegenhaltungen:
- GB-A- 1 461 041
- US-A- 4 070 774
- US-A- 4 937 040
- US-A1- 2006 234 014

## Beschreibung

Die vorliegende Erfindung betrifft ein Wert- und/oder Sicherheitsdokument mit einer ersten Schicht und mindestens einer über eine Klebstoffschicht mit der ersten Schicht verbundenen zweiten Schicht sowie ein Verfahren zur Herstellung eines derartigen Wert- und/oder Sicherheitsdokuments.

Wert- und/oder Sicherheitsdokumente werden in der Regel mit schichtförmigen Sicherheitsmerkmalen versehen, die auf einer im Folgenden als erste Schicht bezeichneten Trägerschicht des Wert- und/oder Sicherheitsdokuments angeordnet sind und eine zweite Schicht ausbilden. Solche folienartigen Sicherheitsmerkmale haben in der Regel die Eigenschaft, dass sie auf der einen Seite leicht verifizierbar und auf der anderen Seite schwer nachzuahmen sind. Eine Möglichkeit der Fälschung von Wert- und/oder Sicherheitsdokumenten besteht deshalb darin, aus einem oder mehreren gestohlenen Dokumenten ein solches schichtförmiges Sicherheitsmerkmal heraus- oder abzulösen und in ein gefälschtes Dokument einzubringen. Beispiele für derartige Sicherheitsmerkmale sind Overlay-Folien, z.B. TKO-Folien (Transparent-Kinegram-Overlay-Folien), Photopolymerfolien, die mit Volumenhologrammen versehen sein können, oder Folien mit Prägehologrammen. Derartige mit Sicherheitsmerkmalen versehene zweite Schichten werden häufig auf der ersten Schicht (Trägerschicht) mittels Klebstoff, beispielsweise mittels thermisch oder UV-härtbarem Klebstoff, z.B. Acrylate, Epoxide oder Mischungen derselben, befestigt.

Bei Untersuchungen von gefälschten Dokumenten hat sich gezeigt, dass es bei herkömmlichen schichtartigen Sicherheitsmerkmalen einem Fälscher häufig gelingt, diese in ihrer Gesamtheit von dem Originaldokument zerstörungsfrei abzuheben, wenn ein Teil des Sicherheitsmerkmals ohne Schäden abgelöst werden kann. Es wird daher zur Erhöhung der Fälschungssicherheit der Wert- und Sicherheitsdokumente angestrebt, das zerstörungsfreie Ablösen eines schichtförmigen Sicherheitsmerkmals zu erschweren.

Aus der Druckschrift DE 10 2005 061 126 A1 ist ein Etikett bekannt, das eine erhöhte Fälschungssicherheit besitzt. Das bekannte Etikett weist ein Trägerlaminat auf, das sich aus zumindest zwei beispielsweise als Lackschichten ausgebildeten Trägerschichten zusammensetzt, wobei auf einer der äußeren Seiten der Trägerschichten eine Kleberbeschichtung angeordnet ist. Zwischen den Trägerschichten des Trägerlaminats ist eine nicht vollflächig aufgetragene Trennschicht vorhanden, welche die Interlaminathaftung zwischen den beiden Trägerschichten herabsetzt. Die Haftkräfte der Trennschicht zu zumindest einer der Trägerschichten sind geringer als die Haftkräfte der anderen Trägerschicht zur ersten. Das bekannte Etikett besteht somit aus zwei nicht mittels Kleber verbundenen Trägerschichten. Das bekannte Etikett kann, falls es gelingt, dieses vollständig mit beiden Trägerschichten entlang der äußeren Kleberschicht von einer Unterlage zu lösen, nach wie vor für eine Fälschung verwendet werden.

Das Gebrauchsmuster DE 299 02 725 U1 schlägt ein Etikett vor, das mindestens eine Abdecklage aufweist. Auf der Unterseite der Abdecklage ist eine Farbschicht angeordnet. Auf der der Abdecklage gegenüber liegenden Seite der Farbschicht sind Haftmittel vorgesehen, die als Klebstoffschicht oder Klebstoffband ausgebildet sind und zur Befestigung des Etiketts an einer Trägerschicht dienen. Ferner sind zwischen der Farbschicht und der Abdecklage oder der Farbschicht und den Haftmitteln abschnittsweise adhäsionsvermindernde Adhäsionskrafteinstellmittel vorgesehen, welche zum lokalen selektiven Einstellen der Adhäsionskraft zwischen den entsprechenden Schichten dienen. Beim Fälschungsversuch reißt das Etikett an den Stellen, an denen das Adhäsionskrafteinstellmittel vorgesehen ist, zwischen den entsprechenden Schichten, so dass ein vollständiges Ablösen erschwert wird. Dieses Etikett ist vergleichsweise kompliziert aufgebaut, weist aufgrund der vielen übereinander liegenden Schichten eine große, unvorteilhafte Dicke auf und ermöglicht ebenfalls das Ablösen des gesamten Etiketts von dem Träger in einem Stück.

Aus der Druckschrift DE 27 31 789 A1 ist eine Klebeplakette bekannt, welche auf einer Trägerunterlage angebracht werden kann und zur Unterbindung von Fälschungen dient. Diese Klebeplakette besteht aus zwei Schichten, wobei mindestens eine Schicht aus einem zähen, reißfesten und plastisch verformbaren Material besteht, während die andere Schicht aus einem dieser Schicht gegenüber dehnungssteiferen Material gebildet ist, das bei geringer Verformung bruch- und reißempfindlich ist. Eine solche Klebeplakette kann als eine Einheit von dem Träger abgezogen werden. Hierbei verformt sich jedoch die zähere Schicht bei Zug-, Biege- und Torsionsbeanspruchung derart, dass sie in den ursprünglichen Zustand nicht zurückverformbar ist. Die Abmessungen dieser Schicht sind somit verändert, so dass bei der versuchten Entfernung die dehnungssteifere, ggf. harte oder spröde Schicht ebenfalls beschädigt wird und ggf. bricht oder reißt. Bei einer derartigen Klebeplakette muss ggf. das Material mindestens einer Schicht verändert und in ihrer Dehnungssteifigkeit entsprechend angepasst werden, was vielfach nicht erwünscht ist.

Die Druckschriften US 2006/0234014 A1 und US 4,937,040 beschreiben Gegenstände mit einer Klebstoffschicht, wobei die Klebstoffschicht in unterschiedlichen Bereichen eine unterschiedliche Zusammensetzung aufweist.

Aus Dokument US 4,070,774 ist eine Tasche für eine Identifikationskarte bekannt, welche ein strukturierte, d.h. mit einem Muster versehene, Klebstoffschicht aufweist.

Bei dem aus GB 1 461 041 bekannten Datenträger werden Bereiche der Oberfläche der miteinander zu verbindenden Schichten vor dem Laminieren beispielsweise mit einem Trennmittel, z.B. auf der Basis von Silikon, behandelt, um eine Zerstörung der Schichten beim Auseinanderreißen zu begünstigen.

Die Aufgabe der vorliegenden Erfindung besteht somit darin, ein einfach aufgebautes Wert- und/oder Sicherheitsdokument zu schaffen, bei dem das zerstörungsfreie Separieren einer an einer ersten Schicht mittels Klebstoff befestigten zweiten Schicht erschwert wird. Zudem besteht die Aufgabe darin, ein einfaches und kostengünstiges Verfahren zur Herstellung eines derartigen Wert- und/oder Sicherheitsdokuments anzugeben.

Die obige Aufgabe wird durch ein Wert- und Sicherheitsdokument mit den Merkmalen des Anspruchs 1 und ein Verfahren mit den Merkmalen des Anspruchs 9 gelöst.

Die obige Aufgabe wird gemäß der vorliegenden Erfindung im Wesentlichen dadurch gelöst, dass die Haftkraft zwischen Klebstoffschicht und der ersten Schicht und/oder die Haftkraft zwischen der Klebstoffschicht und der zweiten Schicht in zumindest zwei verschiedenen Bereichen unterschiedlich ist.

Hierbei werden unter verschiedenen Bereichen solche Bereiche oder Abschnitte der Schichtstruktur bzw. der Klebstoffschicht verstanden, die lateral, d.h. entlang der Raumrichtungen, in der die Schichten ihre größte Ausdehnung aufweisen, an unterschiedlichen Orten derart lokalisiert sind, dass sie sich nicht überschneiden. Ferner wird davon ausgegangen, dass die Klebstoffschicht auf der gesamten Oberfläche der zweiten Schicht angeordnet ist. Vorzugsweise ist außerdem auf und/oder in der zweiten Schicht ein Sicherheitsmerkmal, beispielsweise ein Volumen- oder Prägehologramm, vorgesehen.

Erfindungsgemäß ist vorgesehen, dass die Klebstoffschicht in den zumindest zwei verschiedenen Bereichen einen unterschiedlichen Vernetzungsgrad aufweist. Unterschiedliche Vernetzungsgrade desselben Klebers verursachen in der Schicht unterschiedliche Elastizitäten und Reißdehnungen sowie unterschiedliche Kohäsions- und Adhäsionskräfte. Somit ist das Reißverhalten der Klebstoffschicht in den verschiedenen Bereichen unterschiedlich.

Durch eine solche partielle Variation der Haftkraft des Klebstoffs bzw. der Klebekraft entlang der lateralen Ausdehnung der ersten Schicht bzw. der zweiten Schicht wird die zweite Schicht (Overlay-Folie) bei dem Versuch, diese abzuziehen, sehr wahrscheinlich beschädigt, da erfindungsgemäß Klebeflächen mit Bereichen entstehen, in denen die Haftkraft der Klebstoffschicht stärker bzw. schwächer ist. Zieht man z.B. die zweite Schicht ausgehend von einem Bereich mit starker Haftkraft der Klebstoffschicht mit einer entsprechend hohen Kraft und gelangt dann zu einem Bereich, in dem nur eine geringe Haftkraft vorliegt, so wird die Abziehbewegung ruckartig fortgesetzt und die zweite Schicht mit hoher Geschwindigkeit gezogen, so dass diese vermutlich bis zum Reißen belastet wird. Wenn im Verlauf eines Ablösevorgangs ein Übergang von geringer zu hoher Haftkraft erreicht wird, kann es ebenfalls zu einem Abreißen der zweiten Schicht kommen.

Zusätzlich kann die Dicke der Klebstoffschicht in den zumindest zwei verschiedenen Bereichen unterschiedlich gestaltet sein. Hierbei ist jedoch in den verschiedenen Bereichen jeweils zumindest eine gewisse (ggf. geringe) Schichtdicke des Klebstoffs vorhanden. Die Dicke der Klebstoffschicht wird im Wesentlichen in die Raumrichtung gemessen, die sich senkrecht zu den lateralen Richtungen erstreckt.

Dieses Ausführungsbeispiel der vorliegenden Erfindung beruht auf der Erkenntnis, dass die Zerstörung der Klebeverbindung in der Klebstoffschicht einerseits durch Kohäsionsbruch (die Verbindung reißt innerhalb der Klebeschicht) oder andererseits durch Adhäsionsbruch (die Verbindung reißt an den Grenzflächen zu der angrenzenden ersten Schicht und/oder der angrenzenden zweiten Schicht) erfolgt. Die Klebstoffschicht kann nun derart strukturiert werden, dass die Dicke der Klebstoffschicht variiert. Für ideal glatte Klebstoffschichten beträgt die Schichtdicke mit der optimalen, d.h. größten, Haftkraft etwa 1 µm. Wenn die Klebstoffschicht nun in bestimmten Bereichen eine Schichtdicke von über einem 1 µm aufweist, so erhöht sich in diesen Bereichen die Wahrscheinlichkeit eines Kohäsionsbruchs. Bei einer Schichtdicke von deutlich unter 1 µm erhöht sich die Wahrscheinlichkeit eines Adhäsionsbruchs. Somit ist die Haftkraft dann, wenn die Dicke der Klebstoffschicht in den übrigen Bereichen deutlich über oder unter 1 µm liegt, in den übrigen Bereichen deutlich kleiner. Zudem wirkt sich eine unterschiedliche Klebeschichtdicke auf die Reißdehnung aus, die in der Regel zwischen 5% und 100% liegt. Eine dünnere Klebstoffschicht reißt schneller als eine dickere Klebstoffschicht.

In der praktischen Anwendung bei nicht ideal glatten Klebstoffschichten werden in den mindestens zwei verschiedenen Bereichen der Klebstoffschicht zumindest ein erster und ein zweiter Bereich unterschieden, wobei die Klebstoffschicht in dem ersten Bereich eine Dicke von etwa 0,5 µm bis etwa 5 µm aufweist, vorzugsweise von etwa 3 µm bis etwa 4 µm, während die Klebstoffschicht in dem zweiten Bereich eine Dicke von etwa 3 µm bis etwa 20 µm aufweist. Hierbei ist die Dicke der Klebstoffschicht in dem ersten Bereich und dem zweiten Bereich so gewählt, dass die Dicke der Klebstoffschicht in dem ersten Bereich kleiner ist als in dem zweiten Bereich.

In einem weiteren bevorzugten Ausführungsbeispiel kann die Klebstoffschicht zusätzlich in den zumindest zwei verschiedenen Bereichen eine unterschiedliche Zusammensetzung aufweisen. Beispielsweise können in den zwei verschiedenen Bereichen jeweils verschiedene Klebstoffe unterschiedlicher Haftkraft verwendet werden, wobei die Zusammensetzung der Klebstoffschicht in ein und demselben Bereich vor allem in die Raumrichtung, die senkrecht zu den lateralen Richtungen verläuft, im Wesentlichen gleich ist. Zur Herstellung einer derartigen Klebstoffschicht, beispielsweise mittels eines Druckverfahrens wie Offset-Druck, werden die Klebstoffe in nebeneinander angeordneten Schichten in Laufrichtung einer Walze aufgebracht. Bei der Verwendung von Druckverfahren kann in einem bestimmten, möglichst kleinen Abschnitt im Übergangsbereich zwischen den Bereichen mit unterschiedlicher Zusammensetzung der Klebstoffe eine Mischung der nebeneinander vorliegenden Klebstoffe erfolgen. Beispielsweise können die folgenden Klebstoffe mit unterschiedlicher Haftkraft nebeneinander verwendet werden:
a) Polytec PBond UV-PL 1721
b) Polytec PBond UV-PL 0920

Die mit a) und b) bezeichneten Klebstoffe sind Acrylatkleber. Bei Verwendung in einem erfindungsgemäßen Wert- und/oder Sicherheitsdokument hat ein Bereich, welcher den Klebstoff a) aufweist, eine geringere Haftkraft und eine höhere Reißdehnung als ein Bereich mit dem Klebstoff b). Ein Bereich mit dem Klebstoff b) zeigt demnach eine höhere Haftkraft und eine geringere Reißdehnung als ein Bereich mit dem Klebstoff a).

Alternativ oder zusätzlich zu den obigen Ausführungsbeispielen kann die erste Schicht und/oder die zweite Schicht auf ihrer jeweils der Klebstoffschicht zugewandten Oberfläche in den zumindest zwei verschiedenen Bereichen eine unterschiedliche Oberflächenstruktur aufweisen. Beispielsweise kann man in die erste Schicht und/oder die zweite Schicht Strukturen und Prägungen einbringen, welche durch den verwendeten Klebstoff verfüllt werden. In diesem speziellen Fall ergeben sich durch die unterschiedliche Strukturierung der Oberflächen unterschiedliche Dicken der Klebstoffschicht mit den oben bereits erläuterten Folgen. Eine weitere Möglichkeit besteht darin, dass die der Klebstoffschicht zugewandte Oberfläche der ersten Schicht und/oder der zweiten Schicht in mindestens einem der zumindest zwei verschiedenen Bereiche einer Plasma- oder Corona-Behandlung unterzogen wurde. Die Plasma- oder Corona-Behandlung variiert die Adhäsionskraft des Klebers auf der jeweiligen Oberfläche örtlich, so dass die Haftkraft unterschiedlich ist.

Für die vorliegende Erfindung geeignete Klebstoffe sind insbesondere Acrylatklebstoffe. Weitere geeignete Klebstoffe können der Literatur entnommen werden, beispielsweise Ullmann's Encyclopedia of Industrial Chemistry, Electronic Release 2008. Der Inhalt dieser Quelle wird hiermit in die Offenbarung aufgenommen.

Die obige Aufgabenstellung wird ferner durch ein Verfahren zur Herstellung eines oben beschriebenen Wert- und/oder Sicherheitsdokuments mit Merkmalen des Anspruchs 8 gelöst. Bei dem erfindungsgemäßen Verfahren wird zunächst die erste und die zweite Schicht bereitgestellt, danach wird die Klebstoffschicht zunächst unvernetzt, vorzugsweise mittels Rakeln, Drucken, Düsen oder Sprühen, auf die erste Schicht und/oder die zweite Schicht aufgebracht und anschließend werden die erste Schicht und die zweite Schicht so übereinander gelegt, dass die Klebstoffschicht zwischen diesen angeordnet ist. Dieses Herstellungsverfahren ist besonders einfach und kostengünstig.

Erfindungsgemäß wird zudem der Klebstoff unter Anwendung eines Abschattungsmittels, insbesondere einer Quarzglas-Schablone, gegenüber der zur Vernetzung verwendeten elektromagnetischen Strahlung, vorzugsweise im UV-Wellenlängenbereich, vernetzt. Durch die Abschattung beispielsweise mittels der Quarzglas-Schablone kann in den abgeschatteten Bereichen die Strahlungsdosis verringert werden, so dass dort ein geringerer Vernetzungsgrad erreicht wird als in den übrigen Bereichen der Klebstoffschicht. Es versteht sich hierbei, dass die Gesamtdosis so gewählt werden muss, dass keine unvernetzten Bestandteile des Klebers nach dem Fertigungsschritt erhalten bleiben. Lediglich der Vernetzungsgrad ist in den verschiedenen Bereichen unterschiedlich. Das Abschattungsmittel kann beispielsweise Muster wie Länderwappen, Logo, Schriftzug usw. ausbilden.

Ggf. schließt sich an das Aufeinanderlegen von erster und zweiter Schicht eine Temperbehandlung und/oder eine Bestrahlung des Wert- und/oder Sicherheitsdokuments mittels elektromagnetischer Strahlung zur Aushärtung, Verfestigung oder Vernetzung des Klebstoffs an. Alternativ oder zusätzlich hierzu kann Druck in eine Raumrichtung, die senkrecht zu den lateralen Richtungen verläuft, aufgebracht werden.

In einem bevorzugten Ausführungsbeispiel wird die Klebstoffschicht nach dem Aufbringen mechanisch, beispielsweise mittels einer Walze oder eines Stempels, strukturiert. Durch diese Strukturierung wird nach Fertigstellung des Wert- und/oder Sicherheitsdokuments eine Variation der Haftkraft in den unterschiedlich strukturierten Bereichen erreicht.

Alternativ oder zusätzlich kann die erste Schicht und/oder die zweite Schicht vor dem Aufbringen des Klebstoffs oder vor dem Aufeinanderlegen der ersten Schicht und der zweiten Schicht auf der der Klebstoff zugewandten Oberfläche strukturiert, z.B. geprägt, werden. Diese Strukturen bilden beispielsweise Vertiefungen, die nach dem Aufbringen der jeweils anderen Schicht durch den Klebstoff verfüllt werden, so dass sich unterschiedliche Dicken der Klebstoffschicht in den verschiedenen Bereichen ergeben.

In einem weiteren Ausführungsbeispiel kann die der Klebstoffschicht zugewandte Oberfläche der ersten Schicht und/oder der zweiten Schicht vor dem Aufbringen des Klebstoffs oder vor dem Aufeinanderlegen der ersten Schicht und der zweiten Schicht in mindestens einem der zumindest zwei verschiedenen Bereiche einer Plasma- oder Corona-Behandlung unterzogen werden. Die Plasma- oder Corona-Behandlung in den entsprechenden Bereichen bewirkt, wie oben bereits erläutert, eine Variation der Haftkraft in den entsprechenden Bereichen.

Weitere Merkmale, Vorteile und Anwendungsmöglichkeiten der Erfindung ergeben sich auch aus der nachfolgenden Beschreibung von Ausführungsbeispielen und den Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen schematisch:
- Figur 1: Ein erstes Vergleichsbeispiel eines Wert- und/oder Sicherheitsdokuments in einem Querschnitt,
- Figur 2: ein Ausführungsbeispiel eines erfindungsgemäßen Wert- und/oder Sicherheitsdokuments in einem Querschnitt,
- Figur 3: einen Schritt der Herstellung des in Figur 2 gezeigten Ausführungsbeispiels und
- Figur 4: ein zweites Vergleichsbeispiel eines Wert- und/oder Sicherheitsdokuments in einem Querschnitt.

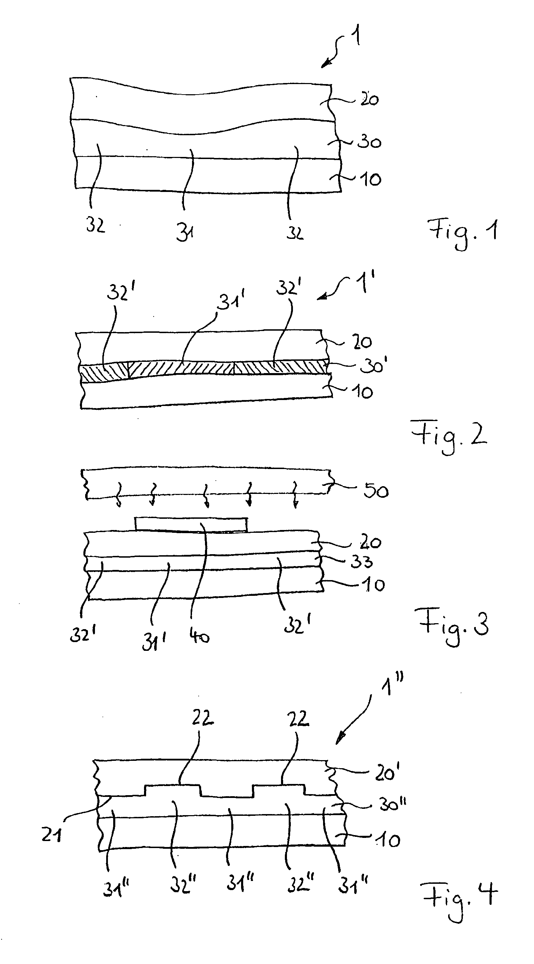

In dem in Figur 1 dargestellten Wert- und/oder Sicherheitsdokument 1 ist eine erste Schicht (Trägerschicht) 10 über eine Klebstoffschicht 30 mit einer zweiten Schicht (Overlay-Folie) 20 verbunden. Die Klebstoffschicht weist einen ersten Bereich 31 mit einer verglichen mit zweiten Bereichen 32 geringeren Dicke auf.

Wenn beispielsweise die Klebstoffschicht in den zweiten Bereichen 32 eine Schichtdicke von 1 µm mit einer optimalen Haftkraft aufweist, dann ist die Haftkraft im ersten Bereich 31, der eine geringere Dicke aufweist, gegenüber dem zweiten Bereich 32 verringert.

Bei dem in Figur 2 dargestellten Ausführungsbeispiel eines erfindungsgemäßen Wert- und/oder Sicherheitsdokuments 1' weist die zwischen der ersten Schicht 10 und der zweiten Schicht 20 angeordnete Klebstoffschicht 30' über ihre gesamte laterale Ausdehnung im Wesentlichen die gleiche Dicke auf. Allerdings hat sie in dem ersten Bereich 31' einen anderen Vernetzungsgrad als in den zweiten Bereichen 32'. Unter einem unterschiedlichen Vernetzungsgrad wird erfindungsgemäß auch eine unterschiedliche Kettenlänge der beteiligten Moleküle der Klebstoffe verstanden. Unterschiedliche Kettenlängen können dadurch erzielt werden, dass bei der Härtung eines Klebstoffs, bspw. auf Acrylatbasis, die Dosis der UV-Bestrahlung und der Zeitraum der UV-Bestrahlung variiert wird. Durch die UV-Bestrahlung wird die radikalische Polymerisation initiiert.

Um einen unterschiedlichen Vernetzungsgrad zu erreichen, wird, wie in Figur 3 dargestellt ist, die Vernetzung der noch unvernetzten Klebstoffschicht 33 nach dem Aufeinanderlegen der ersten Schicht 10 und der zweiten Schicht 20 unter Anwendung einer Quarzglas-Schablone 40 durchgeführt. Bei einer Bestrahlung mittels elektromagnetischer Strahlung im UV-Wellenlängenbereich, die durch eine Strahlungsquelle 50 auf die Schichtstruktur aufgebracht wird, erfolgt mittels der Quarzglas-Schablone 40 eine Abschattung der Strahlung in einem darunter liegenden ersten Bereich 31' der Klebstoffschicht 33. In den zweiten Bereichen 32' gelangt die elektromagnetische Strahlung ohne Abschattung zu der Klebstoffschicht 33.

In einem weiteren, in Figur 4, dargestellten Wert- und/oder Sicherheitsdokument 1" weist die zweite Schicht 20' in ihrer der Klebstoffschicht 30" zugewandten Oberfläche 21 eingeprägte Abschnitte 22 auf. Beim Zusammenfügen der ersten und der zweiten Schicht 10, 20' (Kaschieren) wird der Klebstoff in den zweiten Bereichen 32" in die Vertiefungen bzw. Einprägungen 22 in der Oberfläche 21 hineingedrückt, so dass die Klebstoffschicht 30" in diesen zweiten Bereichen 32" eine größere Dicke aufweist als in den ersten Bereichen 31 ".

### Bezugszeichenliste:

- 1, 1', 1": Wert- und/oder Sicherheitsdokument
- 10: erste Schicht, Trägerschicht
- 20, 20': zweite Schicht, Overlay-Folie
- 21: Oberfläche
- 22: Einprägung
- 30, 30', 30": Klebeschicht
- 31, 31', 31": erster Bereich der Klebstoffschicht
- 32, 32', 32": zweiter Bereich der Klebstoffschicht
- 33: unvernetzte Klebstoffschicht
- 40: Quarzglas-Schablone
- 50: Strahlungsquelle

## Patentansprüche

1. Wert- und/oder Sicherheitsdokument (1') mit einer ersten Schicht (10) und mindestens einer über eine Klebstoffschicht (30') mit der ersten Schicht (10) verbundenen zweiten Schicht (20), wobei die Haftkraft zwischen der Klebstoffschicht (30') und der ersten Schicht (10) und/oder die Haftkraft zwischen der Klebstoffschicht (30') und der zweiten Schicht (20) in zumindest zwei verschiedenen Bereichen (31', 32') unterschiedlich ist, **dadurch gekennzeichnet, dass** die Klebstoffschicht (30') in den zumindest zwei verschiedenen Bereichen (31', 32') einen unterschiedlichen Vernetzungsgrad aufweist.

2. Wert- und/oder Sicherheitsdokument nach Anspruch 1, **dadurch gekennzeichnet, dass** in den zumindest zwei verschiedenen Bereichen die Dicke der Klebstoffschicht unterschiedlich ist.

3. Wert- und/oder Sicherheitsdokument nach Anspruch 2, **dadurch gekennzeichnet, dass** die Klebstoffschicht in einem ersten Bereich der zumindest zwei verschiedenen Bereiche eine Dicke von etwa 0,5 µm bis etwa 5 µm aufweist und in einem zweiten Bereich der zumindest zwei verschiedenen Bereiche eine Dicke von etwa 3 µm bis etwa 20 µm, wobei die Dicke der Klebstoffschicht in dem ersten Bereich kleiner ist als in dem zweiten Bereich.

4. Wert- und/oder Sicherheitsdokument nach einem der vorhergehenden Ansprüche, **dadurch gekennzeichnet, dass** die Klebstoffschicht in den zumindest zwei verschiedenen Bereichen eine unterschiedliche Zusammensetzung aufweist.

5. Wert- und/oder Sicherheitsdokument nach einem der vorhergehenden Ansprüche, **dadurch gekennzeichnet, dass** die jeweils der Klebstoffschicht zugewandte Oberfläche der ersten Schicht und/oder der zweiten Schicht (20) in den zumindest zwei verschiedenen Bereichen eine unterschiedliche Oberflächenstruktur aufweist.

6. Wert- und/oder Sicherheitsdokument nach Anspruch 5, **dadurch gekennzeichnet, dass** die der Klebstoffschicht zugewandte Oberfläche der ersten Schicht und/oder der zweiten Schicht in mindestens einem der zumindest zwei verschiedenen Bereiche mindestens eine Prägung aufweist.

7. Wert- und/oder Sicherheitsdokument nach einem der vorhergehenden Ansprüche, **dadurch gekennzeichnet, dass** die zweite Schicht (20) ein Sicherheitsmerkmal, vorzugsweise ein Volumenhologramm oder ein Prägehologramm aufweist.

8. Verfahren zur Herstellung eines Wert- und/oder Sicherheitsdokuments nach einem der vorhergehenden Ansprüche, wobei zuerst die erste Schicht und die zweite Schicht bereitgestellt wird, danach die Klebstoffschicht, zunächst unvernetzt, vorzugsweise mittels Rakeln, Drucken, Düsen oder Sprühen, auf die erste Schicht und/oder die zweite Schicht aufgebracht wird und anschließend die erste Schicht und die zweite Schicht so übereinander gelegt werden, dass die Klebstoffschicht zwischen den beiden Schichten angeordnet ist, **dadurch gekennzeichnet, dass** danach die Vernetzung der Klebstoffschicht unter Anwendung eines Abschattungsmittels, insbesondere einer Quarzglas-Schablone (40), gegenüber der zur Vernetzung verwendete elektromagnetische Strahlung, vorzugsweise im UV-Wellenlängenbereich, erfolgt.

9. Verfahren nach Anspruch 10, **dadurch gekennzeichnet, dass** die Oberfläche der Klebstoffschicht nach dem Aufbringen mechanisch, beispielsweise mittels einer Walze oder eines Stempels, strukturiert wird.

10. Verfahren nach einem der Ansprüche 8 bis 9, **dadurch gekennzeichnet, dass** die erste Schicht und/oder die zweite Schicht vor dem Aufbringen des Klebstoffs oder vor dem Übereinanderlegen der ersten Schicht (10) und der zweiten Schicht in mindestens einem der zumindest zwei verschiedenen Bereiche auf der der Klebstoffschicht zugewandten Oberfläche strukturiert wird.

11. Verfahren nach einem der Ansprüche 8 bis 10, **dadurch gekennzeichnet, dass** die der Klebstoffschicht zugewandte Oberfläche der ersten Schicht und/oder der zweiten Schicht vor dem Aufbringen des Klebstoffs oder vor dem Übereinanderlegen der ersten Schicht und der zweiten Schicht in mindestens einem der zumindest zwei verschiedenen Bereiche einer Plasma- oder Corona-Behandlung unterzogen wird.

## Claims

1. Value and/or security document (1') with a first layer (10) and at least a second layer (20) connected to the first layer (10) by an adhesive layer (30'), wherein the adhesion between the adhesive layer (30') and the first layer (10) and/or the adhesion between the adhesive layer (30') and the second layer (20) is different in at least two different areas (31', 32'), **characterized in that** the adhesive layer (30') has a different degree of cross-linking within the at least two different areas (31', 32').

2. Value and/or security document according to claim 1, **characterized in that** the thickness of the adhesive layer is different in the at least two different areas.

3. Value and/or security document according to claim 2, **characterized in that** the adhesive layer has a thickness of approximately 0.5 µm to 5 µm within a first area of the at least two different areas and a thickness of approximately 3 µm to 20 µm within the second area of the at least two different areas, wherein the thickness of the adhesive layer in the first area is smaller than in the second area.

4. Value and/or security document according to one of the preceding claims, **characterized in that** the adhesive layer has a different composition in the at least two different areas.

5. Value and/or security document according to one of the preceding claims, **characterized in that** the respective surface of the first layer and/or the second layer (20) facing the adhesive layer has a different surface structure in the at least two different areas.

6. Value and/or security document according to claim 5, **characterized in that** the surface of the first layer and/or the second layer facing the adhesive layer comprise at least one embossing in at least one of the at least two different areas.

7. Value and/or security document according to one of the preceding claims, **characterized in that** the second layer (20) comprises a security feature, preferably a volume hologram or an embossed hologram.

8. Method for preparation of a value and/or security document according to one of the preceding claims, wherein initially the first layer and the second layer are provided, then the adhesive layer, which is initially not cross-linked, is applied onto the first layer and/or the second layer, preferably by knife coating, printing, jetting or spraying, and subsequently the first layer and the second layer are placed on top of each other so that the adhesive layer is between the two layers, **characterized in that** afterwards the adhesive layer is cross-linked using a shading means, particularly a quartz glass mask (40), against the electromagnetic radiation used for cross-linking, preferably in the UV wavelength range.

9. Method according to claim 10, **characterized in that** the surface of the adhesive layer is textured mechanically after its application, for example by means of a roller or a stamp.

10. Method according to one of the claims 8 to 9, **characterized in that** the surface of the first layer and/or the second layer facing the adhesive layer is structured within at least one of the at least two different areas before application of the adhesive layer or before placing the first layer and second layer on top of each other.

11. Method according to one of the claims 8 to 10, **characterized in that** the surface of the first layer and/or the second layer facing the adhesive layer is subjected to a plasma or corona treatment within at least one of the at least two different areas before application of the adhesive layer or before placing the first layer and second layer on top of each other.

## Revendications

1. Document de valeur et/ou de sécurité (1') avec une première couche (10) et au moins une deuxième couche (20) reliée via une couche d'adhésif (30') à la première couche (10), la force d'adhérence entre la couche d'adhésif (30') et la première couche (10) et/ou la force d'adhérence entre la couche d'adhésif (30') et la deuxième couche (20) étant différente dans au moins deux zones (31', 32') différentes,
**caractérisé en ce que** la couche d'adhésif (30') présente un degré de réticulation différent dans ces au moins deux zones (31', 32') différentes.

2. Document de valeur et/ou de sécurité selon la revendication 1, **caractérisé en ce que**, dans ces au moins deux zones différentes, l'épaisseur de la couche d'adhésif est différente.

3. Document de valeur et/ou de sécurité selon la revendication 2, **caractérisé en ce que** la couche d'adhésif présente, dans une première zone de ces au moins deux zones différentes, une épaisseur de près de 0,5 µm à près de 5 µm, et dans une deuxième zone de ces au moins deux zones différentes, une épaisseur de près de 3 µm à près de 20 µm, l'épaisseur de la couche d'adhésif étant moins importante dans la première zone que dans la deuxième zone.

4. Document de valeur et/ou de sécurité selon l'une des revendications précédentes, **caractérisé en ce que** la couche d'adhésif dans ces au moins deux zones différentes présente une composition différente.

5. Document de valeur et/ou de sécurité selon l'une des revendications précédentes, **caractérisé en ce que** la surface, respectivement tournée vers la couche d'adhésif, de la première couche et/ou de la deuxième couche (20) présente une différente structure de surface dans ces au moins deux zones différentes.

6. Document de valeur et/ou de sécurité selon la revendication 5, **caractérisé en ce que** la surface, tournée vers la couche d'adhésif, de la première couche et/ou de la deuxième couche présente, dans au moins l'une de ces au moins deux zones différentes, au moins un estampage.

7. Document de valeur et/ou de sécurité selon l'une des revendications précédentes, **caractérisé en ce que** la deuxième couche (20) présente un élément caractéristique de sécurité, de préférence un hologramme en volume ou un hologramme d'estampage.

8. Procédé pour la fabrication d'un document de valeur et/ou de sécurité selon l'une des revendications précédentes, dans lequel on met tout d'abord à disposition la première couche et la deuxième couche, ensuite, la couche d'adhésif, tout d'abord non réticulée, étant appliquée sur la première couche et/ou la deuxième couche de préférence au moyen d'un raclage, d'une impression, par buses ou pulvérisation, et ensuite, la première couche et la deuxième couche étant disposées l'une au-dessus de l'autre de manière à ce que la couche d'adhésif soit disposée entre les deux couches,
**caractérisé en ce que** la réticulation de la couche d'adhésif a ensuite lieu en utilisant un moyen d'occultation, en particulier un gabarit en verre de quartz (40), par rapport au rayonnement électromagnétique utilisé pour la réticulation, de préférence dans la plage des longueurs d'ondes des UV.

9. Procédé selon la revendication 10, **caractérisé en ce que** la surface de la couche d'adhésif est structurée mécaniquement après l'application, par exemple au moyen d'un cylindre ou d'un poinçon.

10. Procédé selon l'une des revendications 8 à 9, **caractérisé en ce que** la première couche et/ou la deuxième couche, avant l'application de l'adhésif ou avant la superposition de la première couche (10) et de la deuxième couche, est structurée, dans au moins l'une des deux zones différentes, sur la surface tournée vers la couche d'adhésif.

11. Procédé selon l'une des revendications 8 à 10, **caractérisé en ce que** la surface tournée vers la couche d'adhésif de la première couche et/ou de la deuxième couche, avant l'application de l'adhésif ou avant la superposition de la première couche et de la deuxième couche, est soumise à un traitement plasma ou corona dans au moins l'une de ces au moins deux zones différentes.
